# EUROPEAN PATENT SPECIFICATION

(11) **EP 2 888 197 B1**
(45) Date of publication and mention of the grant of the patent: **03.08.2016**
(21) Application number: 13748343.4
(22) Date of filing: 15.08.2013
(51) Int. Cl.: C01B 3/08

(54) **A METHOD FOR RECOVERING HYDROGEN FROM HYDROGEN SULFIDE**
VERFAHREN ZUR RÜCKGEWINNUNG VON WASSERSTOFF AUS SCHWEFELWASSERSTOFF
PROCÉDÉ PERMETTANT DE RÉCUPÉRER DE L'HYDROGÈNE À PARTIR DE SULFURE D'HYDROGÈNE

(30) Priority: 21.08.2012 WO PCT/EP2012/066277
(43) Date of publication of application: 01.07.2015
(73) Proprietor: Haldor Topsøe A/S, 2800 Kgs. Lyngby (DK)
(72) Inventor: HØJLUND NIELSEN, Poul Erik, DK-3480 Fredensborg (DK)
(74) Representative: Haldor Topsøe A/S
(86) International application number: PCT/EP2013/067057
(87) International publication number: WO 2014/029680

(56) References cited:
- JP-A- 2009 185 792
- JP-A- 2010 051 858
- US-A- 5 451 268
- KIUCHI H ET AL: "Recovery of hydrogen from hydrogen sulfide with metals or metal sulfides", INTERNATIONAL JOURNAL OF HYDROGEN ENERGY, ELSEVIER SCIENCE PUBLISHERS B.V., BARKING, GB, vol. 7, no. 6, 1 January 1982 (1982-01-01) , pages 477-482, XP025591268, ISSN: 0360-3199, DOI: 10.1016/0360-3199(82)90104-5 [retrieved on 1982-01-01] cited in the application
- SCHULTZ ET AL: "Processes for the combined production of hydrogen and other chemical products: Desulphurization processes producing hydrogen", INTERNATIONAL JOURNAL OF HYDROGEN ENERGY, ELSEVIER SCIENCE PUBLISHERS B.V., BARKING, GB, vol. 10, no. 7-8, 1 January 1985 (1985-01-01), pages 439-446, XP025414156, ISSN: 0360-3199, DOI: 10.1016/0360-3199(85)90072-2 [retrieved on 1985-01-01] cited in the application
- S. LILIENFELD ET AL: JOURNAL OF THE AMERICAN CHEMICAL SOCIETY, vol. 52, no. 3, 1 March 1930 (1930-03-01), pages 885-892, XP055042236, ISSN: 0002-7863, DOI: 10.1021/ja01366a005 cited in the application

## Description

### Field of the invention

The present invention provides a method for recovering hydrogen from hydrogen sulfide, and a method for purifying a gas stream containing hydrogen sulfide.

### Background to the invention

Gas streams comprising sulfur species, in particular hydrogen sulfide (H₂S), originate from various sources. Natural sources of hydrocarbons may comprise hydrogen sulfide, and hydrogen sulfide is a common additive which provides odour to commercial hydrocarbon supplies. In addition, hydrogen sulfide is often present in waste gas streams from industrial processes.

Sulfur compounds, and in particular hydrogen sulfide, have deleterious effects on many chemical processes. The catalysts used in hydrocracking, synthesis gas processing, methanation, reforming, steam reforming and hydrogenation are often poisoned by the presence of H₂S. To avoid these deleterious effects, methods are required which can effectively remove sulfur compounds, particularly H₂S, without significant effects on other chemical processes. Most suitable are catalytic methods for sulfur removal.

In addition, during gasification of hydrocarbon fuels to synthesis gas, separation of CO₂ and H₂S is carried out in an acid gas removal unit. This should take place such that the resulting CO₂ stream is pure, and such that the H₂S stream does not contain too much CO₂.

WO 2010/048201 discloses a process for the removal/recovery of sulfur from a gas stream.

US 4,582,819 discloses a novel catalytic absorbent composition which is useful for removing hydrogen sulfide.

Kiuchi H. et al. Int. J. Hydrogen Energy, Vol. 7, No. 6, pp. 477-482, 1982, disclose a method in which H2S reacts with metal or metal sulfide. The resulting sulfide goes then through thermal decomposition or oxidation at high temperature, i.e. 600°C and under significant production of Ag₂SO₄. Schultz et al. Int. J. Hydrogen Energy, Vol. 10, No. 7/8, pp. 439-446, 1985, discloses in a more generic way and with reference to Kiuchi H. et al. also a method in which H₂S reacts with metal or metal sulfide, and the resulting sulfide goes then through thermal decomposition or oxidation.

Additional publications in this field include: US2010/0233054, WO 00/02645 as well as JP2010051858A, JP2009185792A, US 5,451,268 and S. Lilienfeld et al, Journal of the American Chemical Society, Vol. 52, No. 3, 1 March 1930, pp. 885-892.

Despite recent advances in the field, there remains a need for a simple, effective method for removal of hydrogen sulfide from a gas stream, preferably in a catalytic process, and preferably with the production of industrially-useful by-products.

### Summary of the invention

The invention thus provides two methods. The first method of the invention is a method for recovering hydrogen from hydrogen sulfide, and comprises the steps of:
a. reacting hydrogen sulfide with supported silver at a temperature of at least 200°C, whereby the silver is converted to silver sulfide and hydrogen is released; and
b. subjecting the silver sulfide to mild oxidation at a temperature below 450°C, whereby the silver sulfide is converted to silver and sulfur dioxide.

The second method of the invention is a method for purifying a gas stream containing hydrogen sulfide. This method comprises the steps of:
a. passing said gas stream over a bed of supported silver at a temperature of at least 200°C, so that the hydrogen sulfide in the gas stream reacts with said silver, whereby the silver is converted to silver sulfide and hydrogen is released; and
b. subjecting the silver sulfide to mild oxidation at a temperature below 450°C, whereby the silver sulfide is converted to silver and sulfur dioxide.

The silver is supported on a support material. The silver content of the supported silver is suitably 5-10 wt%. The support material suitably has a surface area between 1-200 m²/g and/or a porosity from 0.2-0.5cm³/g. The support material has a particle size of between 1-10mm in diameter. Further details of the support material are described below.

As used herein the term "mild oxidation" means reaction of silver sulfide with an oxidant at low temperatures, i.e. below 450°C.

Mild oxidation is suitably carried out using gaseous oxygen, preferably atmospheric air dilute in oxygen (1-5%). The oxidation step, step b., preferably takes place at a temperature between 200-400°C.

The method may take place during gasification of hydrocarbon fuels to synthesis gas. Suitably, steps a. and b. take place immediately after one another in a continuous process.

Preferably, step a. occurs at a temperature of between 250-500°C, more preferably between 300-450°C.

### Detailed description of the invention

The present invention provides two methods. The first method is a method for recovering hydrogen from hydrogen sulfide.

The first step in the first method is reacting hydrogen sulfide with supported silver at a temperature of at least 200°C, suitably between 200°C to 600°C. Preferably this step occurs at a temperature of between 250-500°C, more preferably between 300-450°C. In this step, the silver (in oxidation state 0) is converted to silver sulfide and hydrogen is released:

2Ag + H₂S → Ag₂S + H₂

The equilibrium constant for this process at ca. 400°C is about 30, and the enthalpy is 0.079 kcal/mol; that is essentially thermoneutral.

The silver used in the first step is supported on a support material. Supported silver consists of particles of metallic silver on a support material. Suitable support materials include oxides such as alumina, spinels such as MgAl₂O₄, ZnO, TiO₂.

The silver content of the supported silver is suitably 5-10 wt%, 5-15 wt% or 5-20 wt%. This should be able to absorb 0.5-2wt% sulfur, so that temperature increases can be kept under control.

The second step in the method regenerates the silver in its zero oxidation state. In this second step, the silver sulfide is subjected to mild oxidation at below 450°C, whereby the silver sulfide is converted to silver and sulfur dioxide.

Ag₂S + O₂ --→ 2Ag + SO₂

As described above, the term "mild oxidation" involves the reaction of silver sulfide with an oxidant at temperatures below 450°C. To avoid excessive production of Ag₂SO₄ mild oxidation is suitably carried out at such temperatures, preferably between 200-400°C.

The oxidant for the second step is most commonly gaseous oxygen, such as atmospheric air dilute in oxygen, e.g. 0.5-5% vol.

The invention also provides a method for purifying a gas stream containing hydrogen sulfide. The method comprises the steps of:
a. passing said gas stream over a bed of silver at a temperature of at least 200°C, so that the hydrogen sulfide in the gas stream reacts with said silver, whereby the silver is converted to silver sulfide and hydrogen is released; and b. subjecting the silver sulfide to mild oxidation at below 450°C, whereby the silver sulfide is converted to silver and sulfur dioxide.

This second method of the invention is most suitable during gasification of hydrocarbon fuels to synthesis gas, in which separation of CO₂ and H₂S is carried out in an acid gas removal unit. This should take place such that the resulting CO₂ stream is pure, and such that the H₂S stream does not contain too much CO₂.

All details of the silver, the support material, oxidant and the associated method steps described above for the first method are equally applicable to the second method of the invention.

For both methods of the invention steps a. and b. may take place immediately after one another in a substantially continuous process (i.e. when the silver is deemed to be sufficiently converted to silver sulfide, the hydrogen sulfide or gas stream may be removed, and replaced by a flow of an oxidant).

### Example 1

Suitable sorbent may be prepared as follows. A suitable carrier material chosen from the group of preferably from the group of oxides like alumina and spinels (MgAl₂O₄) or titania, preferably with a surface area between 1-200 m²/g and a porosity from 0.2-0.5cm³/g is saturated with a concentrated solution of silver nitrate containing about 2g in 1g of water. The saturated carrier is dried and calcined at a temperature of 450°C, whereby the silver nitrate is decomposed into silver, nitrogen oxides and oxygen. In order to obtain a suitable silver content (typically 5-20 wt%) the impregnation may be repeated. The particle size of the carrier may for fixed bed applications vary between 1-10 mm in diameter.

### Example 2

1m³ of the sorbent containing 100 kg of silver is subjected to a dry stream of CO₂ containing 0.1% of H₂S at 400°C. The hydrogen sulfide concentration is reduced to about 40 ppm. After passing 1000 Nm³/h gas for 6 hours the sorbent is partially saturated and the exit hydrogen sulfide concentration starts to rise.

### Example 3

100 m3 of the sorbent is subjected to a dry stream of CO₂ containing 2.5% H₂S at 400°C. The hydrogen sulfide concentration is reduced to about 0.1% and about 2.4% H₂ is produced. The effluent gas is directed to an Acid Gas removal unit and the H₂ is recovered. After passing 1000 Nm³/h in 24 hours the sorbent is partially saturated.

### Example 4

The spent sorbent is regenerated by using air with a low oxygen content in order to keep the temperature below 450°C. The inlet temperature may preferably be 200°C or above and the exit temperature between 375-425°C. The effluent gas may be sent to a WSA (Wet Sulfuric Acid) unit for production of concentrated sulfuric acid.

## Claims

1. A method for recovering hydrogen from hydrogen sulfide, said method comprising the steps of:
a. reacting hydrogen sulfide with supported silver at a temperature of at least 200°C, whereby the silver is converted to silver sulfide and hydrogen is released; and
b. subjecting the silver sulfide to mild oxidation at a temperature below 450°C, whereby the silver sulfide is converted to silver and sulfur dioxide.

2. A method for purifying a gas stream containing hydrogen sulfide, said method comprising the steps of:
a. passing said gas stream over a bed of supported silver at a temperature of at least 200°C, so that the hydrogen sulfide in the gas stream reacts with said silver, whereby the silver is converted to silver sulfide and hydrogen is released; and
b. subjecting the silver sulfide to mild oxidation at a temperature below 450°C, whereby the silver sulfide is converted to silver and sulfur dioxide.

3. The method according to any one of claims 1-2, wherein the silver content of the supported silver is 5-10 wt%.

4. The method according to any one of the preceding claims, wherein the support material has a surface area between 1-200 m²/g and/or a porosity from 0.2-0.5 cm³/g.

5. The method according to any one of the preceding claims, wherein the support material has a particle size of between 1-10 mm in diameter.

6. The method according to any one of the preceding claims, wherein mild oxidation is carried out using gaseous oxygen, preferably atmospheric air dilute in oxygen.

7. The method according to any one of the preceding claims, wherein step b. takes place at a temperature between 200 and 400°C.

8. The method according to any one of the preceding claims, wherein the method takes place during gasification of hydrocarbon fuels to synthesis gas.

9. The method according to any one of the preceding claims, wherein steps a. and b. take place immediately after one another in a continuous process.

10. The method according to any one of the preceding claims, wherein step a. occurs at a temperature of between 250-500°C, more preferably between 300-450°C.

## Patentansprüche

1. Verfahren zur Rückgewinnung von Wasserstoff aus Schwefelwasserstoff, wobei das Verfahren die Schritte umfasst:
a. Umsetzen von Schwefelwasserstoff mit geträgertem Silber bei einer Temperatur von mindestens 200°C, wobei das Silber zu Silbersulfid umgewandelt wird und Wasserstoff freigesetzt wird; und
b. milde Oxidation des Silbersulfid bei einer Temperatur unter 450°C, wobei das Silbersulfid zu Silber und Schwefeldioxid umgewandelt wird.

2. Verfahren zur Reinigung eines Gasstroms enthaltend Schwefelwasserstoff, wobei das Verfahren die Schritte umfasst:
a. Leiten des Gasstromes über ein Bett von geträgertem Silber bei einer Temperatur von mindestens 200°C, so dass der Schwefelwasserstoff in dem Gasstrom mit dem Silber reagiert, wobei das Silber zu Silbersulfid umgewandelt wird und Wasserstoff freigesetzt wird; und
b. milde Oxidation des Silbersulfid bei einer Temperatur unter 450°C, wobei das Silbersulfid zu Silber und Schwefeldioxid umgewandelt wird.

3. Verfahren gemäß einem der Ansprüche 1-2, wobei der Silbergehalt des geträgerten Silbers 5-10 Gew.-% beträgt.

4. Verfahren gemäß einem der vorhergehenden Ansprüche, wobei das Trägermaterial eine Oberfläche zwischen 1 und 200 m²/g und/oder eine Porosität von 0,2-0,5 cm³/g aufweist.

5. Verfahren gemäß einem der vorhergehenden Ansprüche, wobei das Trägermaterial eine Partikelgröße zwischen 1 mm und 10 mm im Durchmesser aufweist.

6. Verfahren gemäß einem der vorhergehenden Ansprüche, wobei die milde Oxidation unter Verwendung von gasförmigem Sauerstoff, vorzugsweise atmosphärischer Luft verdünnt in Sauerstoff, durchgeführt wird.

7. Verfahren gemäß einem der vorhergehenden Ansprüche, wobei Schritt b. bei einer Temperatur zwischen 200°C und 400°C erfolgt.

8. Verfahren gemäß einem der vorhergehenden Ansprüche, wobei das Verfahren während der Vergasung von Kohlenwasserstoffbrennstoffen zu Synthesegas stattfindet.

9. Verfahren gemäß einem der vorhergehenden Ansprüche, wobei die Schritte a. und b. unmittelbar nacheinander in einem kontinuierlichen Prozess stattfinden.

10. Verfahren gemäß einem der vorhergehenden Ansprüche, wobei Schritt a. bei einer Temperatur zwischen 250°C und 500°C erfolgt, besonders bevorzugt zwischen 300°C und 450°C.

## Revendications

1. Procédé de récupération d'hydrogène à partir de sulfure d'hydrogène, ledit procédé comprenant les étapes de:
a. réaction du sulfure d'hydrogène avec de l'argent supporté à une température d'au moins 200°C, moyennant quoi l'argent est converti en sulfure d'argent et l'hydrogène est libéré; et
b. soumission du sulfure d'argent à une oxydation douce à une température inférieure à 450°C, moyennant quoi le sulfure d'argent est converti en argent et en dioxyde de soufre.

2. Procédé pour purifier un courant gazeux contenant du sulfure d'hydrogène, ledit procédé comprenant les étapes de:
a. passage dudit courant gazeux sur un lit d'argent supporté à une température d'au moins 200°C, de telle sorte que le sulfure d'hydrogène dans le courant gazeux réagit avec ledit argent, moyennant quoi l'argent est converti en sulfure d'argent et l'hydrogène est libéré; et
b. soumission du sulfure d'argent à une oxydation douce à une température inférieure à 450°C, moyennant quoi le sulfure d'argent est converti en argent et en dioxyde de soufre.

3. Procédé selon l'une quelconque des revendications 1 à 2, dans lequel la teneur en argent de l'argent supporté est de 5 à 10% en poids.

4. Procédé selon l'une quelconque des revendications précédentes, dans lequel le matériau support présente une surface spécifique comprise entre 1 et 200 m²/g et/ou une porosité de 0,2 à 0,5 cm³/g.

5. Procédé selon l'une quelconque des revendications précédentes, dans lequel le matériau support a une taille de particule comprise entre 1 et 10 mm de diamètre.

6. Procédé selon l'une quelconque des revendications précédentes, dans lequel l'oxydation douce est réalisée en utilisant de l'oxygène gazeux, de préférence de l'air atmosphérique dilué dans de l'oxygène.

7. Procédé selon l'une quelconque des revendications précédentes, dans lequel l'étape b. a lieu à une température comprise entre 200 et 400°C.

8. Procédé selon l'une quelconque des revendications précédentes, dans lequel le procédé se déroule au cours de la gazéification de combustibles hydrocarbonés en gaz de synthèse.

9. Procédé selon l'une quelconque des revendications précédentes, dans lequel les étapes a. et b. ont lieu immédiatement l'une après l'autre dans un processus continu.

10. Procédé selon l'une quelconque des revendications précédentes, dans lequel l'étape a. se produit à une température comprise entre 250 et 500°C, plus préférablement entre 300 et 450°C.
